# EUROPEAN PATENT APPLICATION

(11) **EP 4 818 663 A1**
(43) Date of publication of application: **07.10.2026**
(21) Application number: 26167831.2
(22) Date of filing: 25.03.2026
(51) Int. Cl.: G01M 3/00, F16L 55/26, F16L 55/40, G01M 5/00, G01N 21/954, F16L 101/30, G01N 21/95

(54) **SYSTEM FOR THE INSPECTION OF PENSTOCKS OF A HYDROELECTRIC PLANT**

(30) Priority: 31.03.2025 IT 202500006846
(71) Applicant: Edison S.p.A., 20121 Milano (IT); Politecnico di Milano, 20133 Milano (IT)
(72) Inventor: Todesco, Giulia, Milano (IT); Ginocchio, Stefano, Milano (IT); Migliavacca, Martino, Milano (IT); Rizzi, Davide, Milano (IT); Matteucci, Matteo, Milano (IT); Fontana, Giulio, Milano (IT); Frosi, Matteo, Milano (IT); Bardaro, Gianluca, Milano (IT)
(74) Representative: Perani & Partners S.p.A.

(57) **Abstract**

The present invention relates to a system (1) for inspecting a penstock (100) of a hydroelectric plant, comprising:
- a probe (2) configured to be inserted into the penstock (100) so as to rest on an internal surface (100a) thereof and provided with:
- a main body (20) extending along a longitudinal axis (X-X),
- a detection unit (22) comprising at least one inclination sensor (22a) configured to transduce the inclination of the main body (20) with respect to a vertical direction (V-V) into an inclination signal (Si),
- an acquisition unit (23) comprising at least one imaging device (23a, 23b) configured to acquire visual content of the interior of the penstock (100),

- movement means (3) configured to lower the probe (2) along the penstock (100) at a controlled speed by opposing the force of gravity. The probe is characterized by the fact that it comprises steering members (4) provided with:
- a steering element (40) rotatably mounted on the main body (20) around the longitudinal axis (X-X) and configured to come into contact with the internal surface (100a) of the penstock (100),
- an electronic control unit (42) configured to control the angular position of the steering element (40) around the longitudinal axis (X-X) as a function of the inclination signal (Si) so as to maintain the probe (2) in a determined angular position around the main axis (A-A) of the penstock (100) during its advancement therein.

## Description

### Technical Field

The present invention relates to an inspection system that finds useful application in the hydroelectric sector and in any other sector where there is a need to inspect conduits, pipelines, or similar structures.

### State of the Art

A hydroelectric plant is an energy converter that brings a volume of water from a higher elevation to a lower elevation in a controlled manner, so as to transform the potential energy initially possessed by the volume of water into electrical energy.

The pipelines used to carry the water from the basin (upstream) to the hydroelectric power station (downstream), in technical jargon "penstocks", are a key component of the hydroelectric plant.

In use, the penstocks are subject to significant mechanical stresses. The water pressure inside them increases when moving from the basin towards the hydroelectric power station, which leads to pressure levels even equal to about 100 times the atmospheric pressure in the terminal part of the penstock. All this, together with the dynamic effects caused by the water moving at high speed inside them, can lead to damage to the penstocks (e.g., corrosive phenomena, cracks, geometric deformations, anomalous solid deposits, accumulations of limescale and others) that must be promptly detected and monitored to prevent dangerous malfunctions of the hydroelectric plant as well as service interruptions.

Unfortunately, the internal inspection of the penstocks is not easy and convenient to perform. Hydroelectric plants are in fact typically built on steep mountain sides, which makes the penstocks - or at least a large part of their length - difficult to reach. Furthermore, part of the length of a penstock is usually encased in support structural elements - such as, for example, blocks of cement - which further complicate access thereto.

Traditionally, the inspection operations of the penstocks are performed by specialized operators who, by entering inside them through narrow openings (known as "manholes"), determine their state of health.

It is evident that such inspection techniques have considerable drawbacks since, in addition to requiring expensive specialized labor, they are particularly risky for the operators who conduct them.

To overcome these problems, particularly in the Oil & Gas sector or in the water sector (aqueducts and sewers), remote-controlled probes equipped with drive wheels and cameras have been developed, configured to travel along the pipelines to be inspected, which are usually made on flat or substantially flat terrain, acquiring multimedia content that can be used to assess their state of health.

Such probes, designed for the inspection of Oil & Gas or aqueduct/sewer pipelines, find significant limitations in the application in the penstocks of hydroelectric power stations, which are characterized by narrow insertion openings and high inclinations.

In particular, it is worth noting that the known probes are particularly bulky as they comprise a plurality of centering arms projecting radially from a main body. Some of these arms have the function of contacting the upper portion and others the lower portion of the pipeline in order to center the probe on the axis of the pipeline. The bulk of such centering arms is incompatible with the introduction of the probes into the penstocks through the manholes which, for structural reasons of the penstock, must necessarily be of small dimensions. Furthermore, the centering arms limit the application of the probe only to a predetermined dimension of pipelines.

The document JP2014166806A, for example, describes an inspection probe for pipelines configured to operate centered in the conduit. Said probe comprises a main body equipped with omnidirectional wheels and a preloading device (for example, pneumatic cylinders) configured to actively push the wheels against opposite portions of the internal wall of the pipeline. The purpose of this configuration is to keep the probe constantly centered with respect to the axis of the pipeline during advancement, that is, with the longitudinal axis of the main body substantially coinciding with the main (central) axis of the pipeline. The probe will travel along the conduit necessarily following a trajectory coincident with the main axis of the pipeline.

One of the omnidirectional wheels of the probe of JP2014166806A is used to rotate the device around the central axis of the pipeline. It is worth noting that the actuation of the orientation omnidirectional wheel does not modify the advancement trajectory of the probe as this is mechanically constrained to follow the main axis of the pipeline by effect of the preloading device, but only modifies its orientation. The movement trajectory of the probe of JP2014166806A does not need to be controlled as it is intrinsically determined mechanically.

The technical solution described in JP2014166806A, although functional, has the disadvantages mentioned above: the centering mechanism is intrinsically bulky, and it limits its use to pipelines having a diameter greater than the design one.

It is also noted that the known probes have limited operating ranges that do not allow the entire inspection of the extensive penstocks of the hydroelectric power stations with a single insertion. Disadvantageously, this would entail the need to perform multiple insertions of the probes in intermediate sections of the penstocks which are typically located in wooded regions difficult to reach safely by operators.

Furthermore, the known probes require bulky battery packs to power not only the on-board instrumentation but also their propulsion. This significantly increases the bulk and weight of the probes, making them difficult to transport, especially in the intermediate sections of the penstocks.

It is therefore evident that the known probes find severe limitations in their use in penstocks.

### Object of the invention

In this context, the technical task underlying the present invention is to propose a system for inspecting a penstock that overcomes the drawbacks of the known art mentioned above.

In particular, an object of the present invention is to provide a system for the inspection of penstocks that is safe, as well as easy and practical for operators to use.

According to one aspect, an object of the present invention is to provide a flexible inspection system, i.e., usable for the inspection of penstocks of different diameters and extensions.

According to one aspect, an object of the present invention is to provide a system for the inspection of penstocks in which the probe is autonomous, that is, at least capable of autonomously controlling the descent trajectory along the penstock so as to remain centered on a bottom portion thereof or positioned in any other specific internal portion thereof.

According to a further aspect, an object of the present invention is to provide a system for the inspection of penstocks in which the probe has low energy consumption so as to be able to complete the inspection operations with a single insertion.

### SUMMARY OF THE INVENTION

In accordance with the present invention, the indicated technical task and the specified objects are achieved by a system for the inspection of penstocks according to one or more of the claims reported below.

In particular, the present invention proposes to provide an inspection system comprising a probe configured to operate in a non-centered configuration with respect to the main axis (central axis) of the penstock to be inspected. Said probe is therefore configured to operate by resting on the internal surface of the penstock with the longitudinal axis of its main body distinct, in particular offset, from the main axis of the penstock.

This design choice allows for the creation of an extremely compact probe, in particular with a contained transverse bulk, but introduces the need to control the trajectory of the probe, as it is not mechanically constrained as in the probe of JP2014166806A. To this end, the probe of the system object of the present invention is provided with: a steering element rotatably mounted on a main body around a longitudinal axis thereof, and an electronic control unit adapted to control the angular position of the steering element as a function of the inclination of the main body of the probe with respect to the vertical.

Advantageously, by acting on the angular position of the steering element, the electronic control unit allows for controlling the descent trajectory of the probe along the penstock so as to maintain it in a predetermined angular position with respect to the axis of the penstock, that is, the control unit controls the positioning of the probe in the transverse section of the penstock along a circumferential direction to the main axis.

By doing so, the control unit allows for example to make the probe descend along the penstock keeping it centered on the lower portion of the latter without the need to use the bulky centering arms of the known probes which, according to the above, are incompatible with insertion through the manholes of the penstocks.

The inspection system object of the present invention also comprises movement means for the probe along the penstock which, by opposing the force of gravity acting on the probe when it rests on the internal surface of the penstock, allow for feeding the probe along the penstock at a controlled speed.

Advantageously, said inspection system allows to exploit the component of the force of gravity directed parallel to the axis of the penstock to move the probe. The system object of the present invention therefore exploits the inclination of the penstock with respect to the horizontal to power the advancement of the probe. This allows to reduce the energy consumption of the probe in the inspection operations to the benefit of its autonomy. The system object of the present invention is therefore able to complete the inspection of penstocks of significant extensions with a single insertion of the probe, thus being convenient and practical to use.

It is also noted that the system object of the present invention, by relying on the force of gravity for the motion of the probe along the penstock, allows to reduce the weight of the probe itself since it is equipped with a battery pack of limited capacity. This factor also contributes to increasing the usability of the inspection system object of the present invention as the probe is more easily transportable by operators.

From the above, it emerges that the system object of the present invention allows to inspect safely and conveniently the penstocks of hydroelectric plants without the need for the operator to enter inside them or to go in person to intermediate sections of the penstocks typically located in environments that are difficult to reach.

### BRIEF DESCRIPTION OF THE DRAWINGS

Further characteristics and advantages of the present invention will appear more clearly from the indicative, and therefore non-limiting, description of a preferred but not exclusive embodiment of a system for the inspection of a penstock, as illustrated in the accompanying drawings in which:
- Figure 1 shows a perspective view of a probe of a system for the inspection of a penstock according to the present invention,
- Figure 2 shows a side view of the probe of Figure 1,
- Figure 3 shows a front view of the probe of Figure 1,
- Figure 4 shows a perspective view of a component of the probe of Figure 1,
- Figure 5 shows the component of Figure 4 without some parts to better show others,
- Figure 6 shows an exploded view of some components of the probe of Figure 1,
- Figures 7 and 8 show a transverse section of a penstock inside which the probe of Figure 1 is arranged, which moves from a decentralized position to a position centered on the bottom of the penstock by means of the rotation of the steering element,
- Figure 9 shows a schematic side representation of a system according to the present invention in use in a penstock of a hydroelectric plant,
- Figure 10 shows a side view of a possible embodiment of the movement means of the probe of Figure 1 installed on the penstock,
- Figure 11 shows a perspective view of the movement means of the probe of Figure 10.

### DETAILED DESCRIPTION

The present description has as its object a system 1 for the inspection of a penstock 100 of a hydroelectric plant, that is, a pipeline used to transport a fluid flow under pressure, in particular water, between a basin B (upstream) and a power station S (downstream).

Although for simplicity in the following, reference will always be made to penstocks 100 for hydroelectric plants, it is good to specify that the system 1 object of the present description is also usable for inspecting conduits or pipelines of different types, as well as confined or partially confined environments, preferably having at least a section or a region inclined with respect to the horizontal, i.e., having an angle of inclination α, β with respect to the horizontal greater than 0° and that can also reach values close to 90°.

In the context of the present description, the term inspection refers to the acquisition of multimedia content, in particular visual content (e.g., photographs or videos), of an internal portion of the penstock 100 in order to evaluate its operating state and identify the possible need for maintenance interventions.

The system 1 object of the present description comprises a probe 2 insertable into the penstock 100 to be inspected, for example, through special access openings 100b which, in technical jargon, are called "manholes". The latter typically have an elliptical shape with a measurement of 380 x 275 mm.

When inserted into the penstock 100, the probe 2 comes into contact with or is laid on an internal surface 100a thereof and is configured to travel along it in its direction of prevalent extension, that is, to move along a main axis (or central axis) A-A of the penstock 100 (i.e., the line connecting the centers of the transverse sections of the penstock 100).

In particular, in the embodiment shown in the accompanying figures, when inserted into the penstock 100, the probe 2 is configured to be arranged in a non-centered position with respect to the main axis A-A. This configuration is conceptually different from the devices of the known art, such as the one described in JP2014166806A, which are instead designed to be mechanically kept centered inside the pipeline. The probe object of the present description, on the contrary, does not have a mechanical centering as it does not operate in a centered position.

According to one aspect, when inserted into the penstock 100, the probe is configured to rest on a lower portion 101 of the internal surface 100a.

In the context of the present description, with the term "lower portion 101" it is intended to indicate the portion of the internal surface 100a of the penstock 100a located below the main axis A-A along a vertical direction (i.e., the direction of action of the force of gravity). Opposite to the lower portion 101 along the vertical direction V-V, the internal surface 100a of the penstock has an "upper portion 102".

Although in the following reference will be made to the probe 2 that travels along the penstock 100 resting on the lower portion 101, it is not to be excluded that it can travel also in contact with the upper portion 102 or with a lateral portion 103 thereof. Should the probe 2 travel along the penstock 100 in contact with the upper surface 102, it will be provided with appropriate means adapted to hold it in contact with the latter against the force of gravity, such as, for example, permanent magnets.

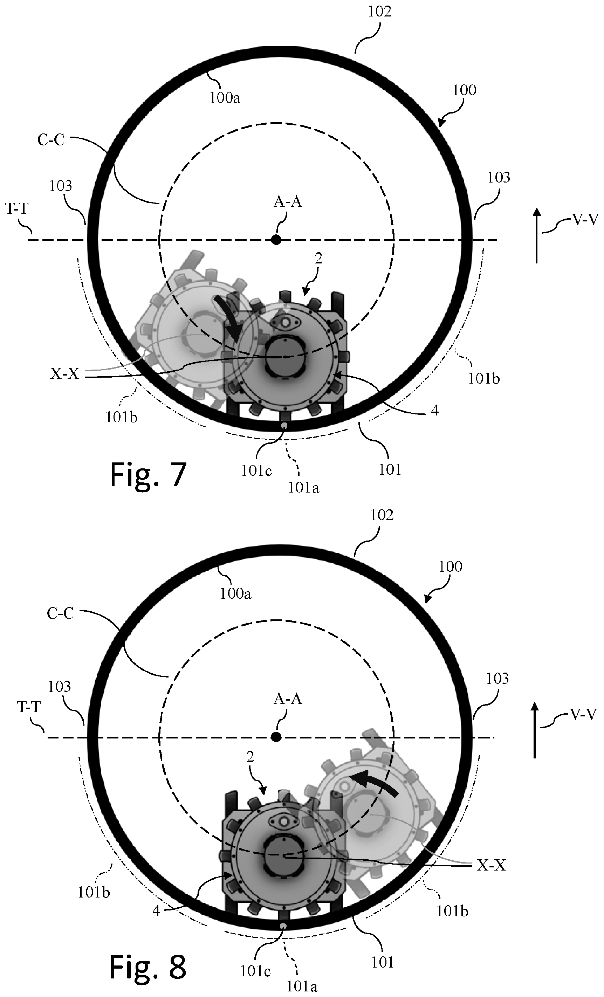

According to one aspect, when the probe 2 is arranged in the penstock 100, it is in contact with only one portion of the internal surface 100a. In particular, in the embodiment shown in figures 7 and 8, the probe 2 is in contact with only the lower portion 101, that is, it is not in contact with the upper portion 102. This implies that the probe 2 has a transverse bulk smaller than the transverse section of the penstock 100, thus facilitating its insertion 2 through the manholes.

Still with reference to figures 7 and 8, it is noted that the probe 2 is mobile in the transverse section of the penstock 100. Therefore, while always remaining in contact with the internal surface 100a, the probe 2 is free to assume centered or decentralized positions with respect to a lower generatrix 101c of the penstock 100 or any other generatrix that one wishes the probe 2 to follow during its descent along the penstock 100. Figures 7 and 8 show in transparency the probe 2 in a decentralized position with respect to the lower generatrix 101c (i.e., in a lateral region 101b of the lower portion 101) and not in transparency the probe 2 in a position centered on the lower generatrix 101c (i.e., in a central region 101a of the lower portion 101, in particular on the lower generatrix 101c).

It is good to specify that in the context of the present description, by generatrix is meant any line which, when rotated around the main axis A-A, generates the internal surface 100a of the penstock 100. The lower generatrix 101c is, among all the generatrices, the one arranged at a lower elevation along the vertical direction V-V and, therefore, is the imaginary line that passes through the lowest points of the transverse sections of the penstock 100.

The probe 2 of the system 1 object of the present description comprises a main body 20 provided with at least one wheel 21, idle or driven, configured to roll on the internal surface 100a (e.g., lower portion 101) of the penstock 100 for the movement of the probe 2 along the penstock 100.

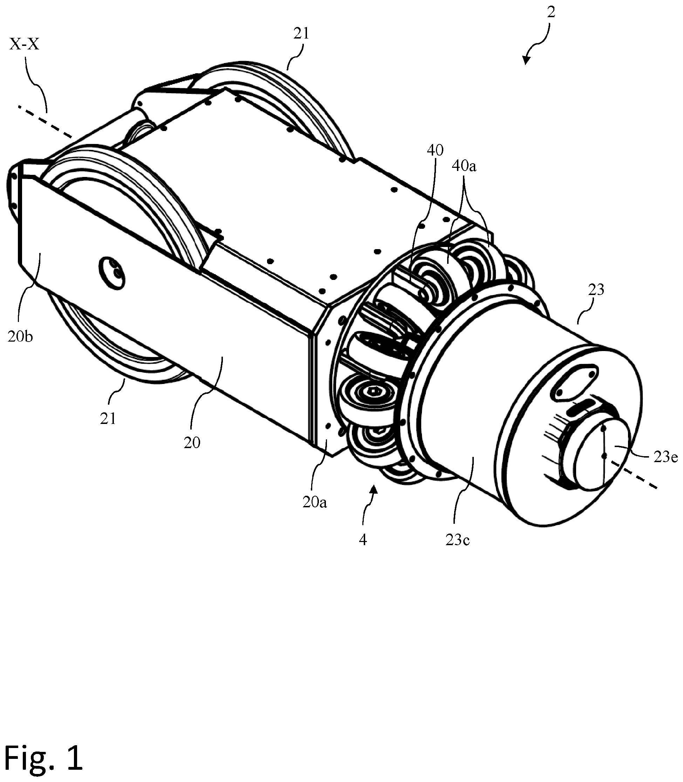

In the embodiment shown in figures 1-3, the probe 2 comprises a pair of wheels 21 projecting from opposite sides of the main body 20 so that they remain in contact with the lower portion 101 of the penstock 100 even in case of overturning (i.e., rotation of the probe 2 by 180° around the longitudinal axis X-X defined below).

The main body 20 of the probe 2 extends along a longitudinal axis X-X between an front portion 20a and a rear portion 20b. When the probe 2 travels along the penstock 100 from the basin B to the power station S, the front portion 20a is arranged frontally (i.e., anteriorly) to the rear portion 20b in the direction of advancement and the longitudinal axis X-X is directed prevalently parallel to the main axis A-A of the penstock 100.

According to an aspect shown in figures 7 and 8, when the probe 2 is arranged in the penstock 100, the longitudinal axis X-X is distinct and spaced, in particular offset, from the main axis A-A of the penstock 100. In other words, the main body 20 is configured so that, when the probe 2 is arranged in the penstock 100, its longitudinal axis X-X is distinct from the main axis A-A of the penstock 100. Therefore, the movement of the probe 2 on the internal surface 100a in the transverse section of the penstock - for example, on the lower portion 101 between the central region 101a and the lateral regions 101b - entails a movement of the longitudinal axis X-X around the main axis A-A along a circumferential direction C-C. By doing so, the probe 2 varies its angular position with respect to the main axis A-A of the penstock 100 and the trajectory traveled by the probe 2 during the descent. Further details in this regard will be provided in a subsequent part of the description.

The main body 20 preferably defines a cavity adapted to contain electrical, and/or electronic, mechanical components of the probe 2 therein.

The probe 2 also comprises an acquisition unit 23 provided with at least one imaging device 23a, 23b configured to acquire visual content (e.g., photographs and/or videos) of the penstock 100, in particular of its internal surface 100a. For example, upon movement of the probe 2 along the penstock 100, the acquisition unit 23 is configured to acquire cylindrical images of the internal surface 100a.

The acquisition unit 23 is preferably fixed in a removable manner to the front portion 20a of the main body 20 so as to project frontly along the longitudinal direction X-X. By doing so, the acquisition unit 23 is positioned on a head of the probe 2 so as to be able to acquire visual content of the internal surface 100a of the penstock 100 before the probe 2 passes over it and so that other parts of the probe 2 do not fall within the field of view of the at least one imaging device 23a, 23b.

According to one aspect, when fixed to the front portion 20a, the acquisition unit 23 is integral with the main body 20 (i.e., the acquisition unit 23 cannot perform relative motions with respect to the main body 20).

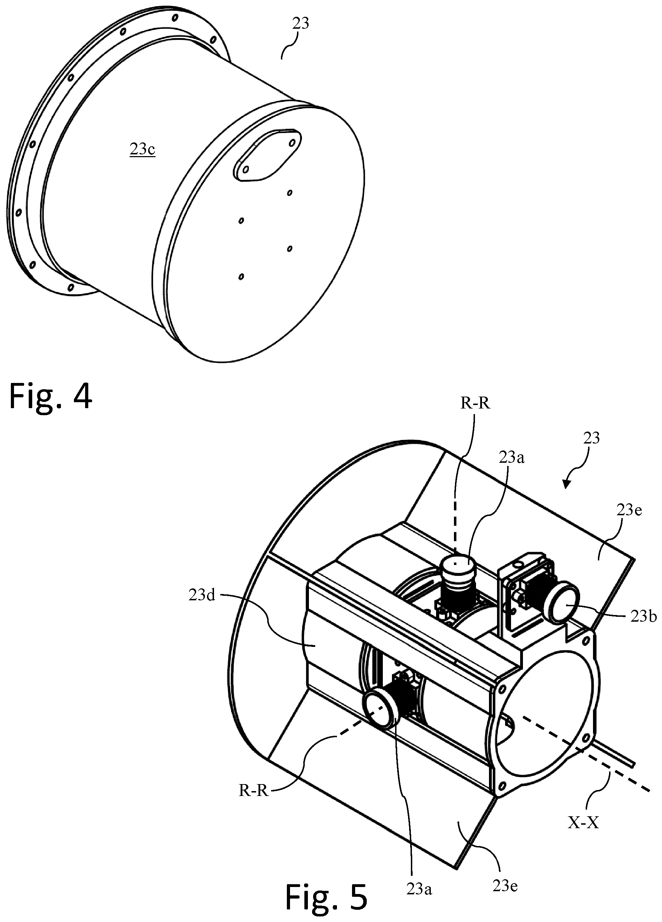

In the embodiment of figure 5, the acquisition unit 23 comprises a plurality of radial imaging devices 23a arranged along respective radial directions R-R around the longitudinal axis X-X. This arrangement ensures that, when the probe 2 rests on the lower portion 101 of the penstock 100, each radial imaging device 23a frames a respective (angular) sector of the internal surface 100a of the penstock 100.

Preferably, the sectors of the internal surface 100a of the penstock 100 framed by the radial imaging devices 23a overlap to allow for constructing cylindrical images of the internal surface 100a of the penstock 100.

According to one aspect, at least two of the radial imaging devices 23a have different focal lengths, that is, they are configured to focus at different distances, for example, as they are equipped with optics with different focusing properties. This allows for adjusting the focus of each radial imaging device 23a as a function of its distance from the sector of the internal surface 100a it frames, thus ensuring a better quality of the acquired visual content.

Preferably, the radial imaging devices 23a facing the lower portion 101 have a shorter focal length than those facing the upper portion 102. For example, the radial imaging devices 23a pointed towards the lower portion 101 mount wide-angle optics with a focal length of 2.72 mm while those pointed towards the upper portion 102 mount wide-angle optics with a focal length of 3.56 mm.

In the embodiment shown in figures 4 and 5, the acquisition unit 23 comprises a transparent protection element 23c that surrounds the radial imaging devices 23a around the longitudinal axis X-X and a support 23d configured to support and arrange the radial imaging devices 23a along the respective radial directions R-R, so that, in use, they frame the internal surface 100a of the penstock 100 through the protection element 23c.

The support 23d preferably comprises a plurality of partitions 23e interposed between the radial imaging devices 23a. Advantageously, said partitions 23e allow for eliminating, or at least reducing, reflections on the protection element 23.

Preferably, the support 23d is removably mounted on the front portion 20a of the main body 20 of the probe 2.

The acquisition unit 23 may also comprise a frontal imaging device 23a configured to perform imaging in the longitudinal direction X-X.

According to one aspect, the acquisition of visual content is implemented through a GStreamer4 pipeline, which allows for managing multiple parallel high-bitrate streams, preferably exploiting the hardware acceleration of an NVIDIA platform to which the imaging devices are connected, consequently reducing the workload of a CPU and, therefore, energy consumption.

Preferably, said pipelines are managed via gstd5 (GStreamer Daemon), which allows for creating and managing the execution of arbitrary pipelines even remotely. In this way, the pipelines are executable on a host system based, for example, on the NVIDIA L4T (Linux for Tegra) distribution, exploiting hardware acceleration, while the high-level logic is managed within respective Docker containers of the software components.

It is good to specify that the visual content can be transmitted in real-time to a remote host to allow for its visualization during acquisitions, when a network connection with the probe 2 is active, and/or saved in an internal memory (not shown in the figures) of the probe 2.

The acquisition unit 23 may also comprise a lidar 23f to monitor the internal profile of the penstock 100 and/or determine geometric characteristics of the same, such as, for example, the diameter.

In the embodiment shown in figures 1-3, the lidar 23f is arranged frontally to the imaging devices 23a, 23b along the longitudinal direction X-X.

The acquisition unit 23 may also comprise illumination means (not shown in the figures), preferably at least one ring of LED illuminators extending around the longitudinal axis X-X, configured to illuminate the area in the proximity of the probe 2. During inspection operations, the illumination means allow for illuminating the internal surface 100a of the penstock 100, object of the visual content acquired by the acquisition unit 23.

The probe 2 also comprises a detection unit 22 provided with at least one inclination sensor 22a configured to transduce the inclination of the main body 20 with respect to the vertical direction V-V into an inclination signal Si.

According to one aspect, the inclination sensor 22a is configured to detect a roll angle A1 representative of the inclination of the main body 20 around the longitudinal axis X-X with respect to the vertical direction V-V and transduce it into the inclination signal Si. It is worth noting that, when the probe is in contact with the internal surface 100a of the penstock 100, the roll angle A1 is linked to the angular position of the probe 2 around the main axis A-A, that is, along the circumferential direction C-C. Therefore, the roll angle A1 detected during the inspection operations is indicative of the angular position of the probe 2 inside the penstock 100.

According to a further aspect, the inclination sensor 22a is also configured to detect a pitch angle A2 representative of the inclination of the main body 20 around a transverse axis Y-Y of the main bodywith respect to the vertical direction V-V and transduce it into the inclination signal Si.

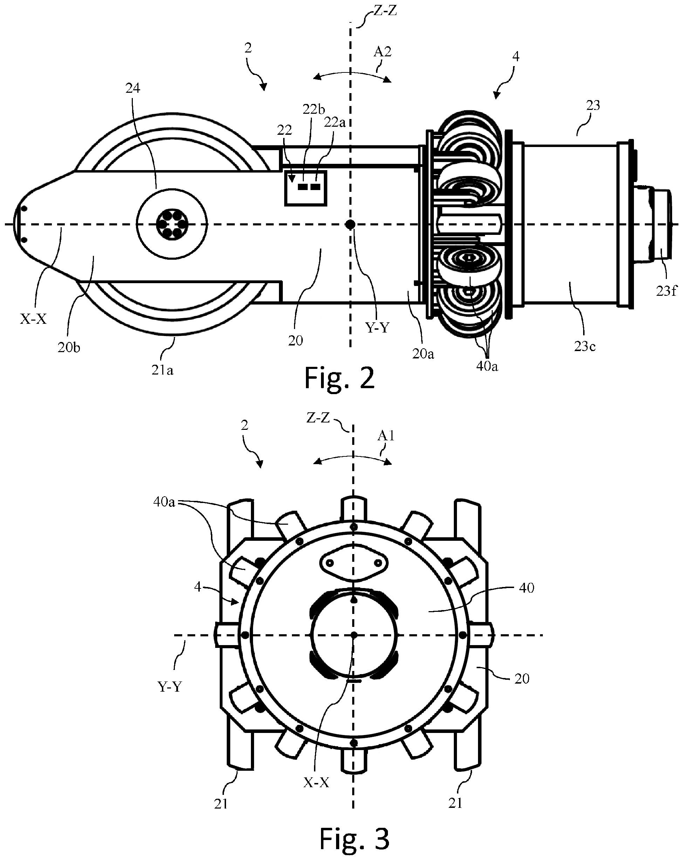

With reference to figures 2 and 3, it is good to specify that the transverse axis Y-Y is directed transversely to the longitudinal axis X-X. In particular, considering the probe 2 as a vehicle, the longitudinal axis X-X, the transverse axis Y-Y and a vertical axis Z-Z, correspond to the homonymous axes used to describe the dynamic behavior of vehicles.

Preferably, the inclination sensor 22a comprises an IMU (Inertial Measurement Unit) which, for example, is provided with a three-axis accelerometer and a three-axis gyroscope. In a possible embodiment, the inclination sensor 22a comprises the InvenSense ICM-42688 sensor.

The detection unit 22 may also comprise at least one movement sensor 22b adapted to detect the advancement speed of the probe 2 along the penstock 100. The movement sensor 22b is therefore configured to transduce a movement speed value of the probe 2 with respect to the penstock 100 into a movement signal Sm.

According to an embodiment, the movement sensor 22b comprises an encoder, for example of the magnetic type, mounted on a wheel 21 of the probe 2.

The probe 2 also comprises steering members 4 which, when the probe 2 is in contact with the internal surface 100a of the penstock 100, are configured to modify the position of the probe 2 around the main axis A-A, that is, to move the probe along the circumferential direction C-C. The steering members 4 are therefore configured to modify the path of the probe 2 on the internal surface 100a to, for example, keep it in the central region 101a of the lower portion 101 and, therefore, centered along a transverse axis T-T of the penstock 100.

The function of the steering element 40 is therefore to actively control the trajectory of the probe 2 - and in particular the path taken - on the internal surface 100a of the penstock 100, correcting any deviations from the desired trajectory. This is fundamentally different from the function of the orientation omnidirectional wheel of the probe of JP2014166806A, which serves to orient the main body of the probe that is already constrained to follow the trajectory determined by the central axis of the conduit and from which it cannot deviate.

It is important to underline the functional distinction between the steering action, performed by the steering element 40 of the present invention, and the simple orientation action, such as that performed by the orientation omnidirectional wheel of the device described in JP2014166806A.

By orientation is meant the rotation of a body around its own main axis, without this entailing a modification of its trajectory. In the case of a mechanically centered device such as that of JP2014166806A, whose trajectory substantially coincides with the main axis of the conduit, the orientation serves only to direct the instrumentations in different angular directions, but the device as a whole will continue to follow the path imposed by the mechanical constraint dictated by the preloading members.

By steering, instead, is meant an action that actively modifies the advancement trajectory of the body, causing a displacement thereof along a direction transverse to the longitudinal axis of the body. In the present invention, the rotation of the steering element 40 generates a lateral force (i.e., transverse to the longitudinal axis X-X) that moves the probe 2 along the circumferential direction C-C of the conduit. This action induces curves in the path taken by the probe during its advancement in the conduit, even in rectilinear sections of the latter.

It is worth noting that the steering element 40 gives the probe the ability to govern its own descent path, a function that is absent and not necessary in probes constrained to a central trajectory, such as the one described in JP2014166806A.

In the context of the present description, the trajectory and/or the position of the probe can be referred to a representative point of the main body 20 of the probe 2 belonging to the longitudinal axis X-X, for example a central point located halfway between the front portion 20a and the rear portion 20b of the main body 20.

According to an embodiment, the steering members 4 are configured to make the probe 2 substantially follow the lower generatrix 101c of the penstock 100. As shown in figures 7 and 8, should the probe 2 for any reason deviate and move into the lateral regions 101b [Translator's Note: Original text states 101c, which appears to be a typo and has been corrected to 101b based on context and Figures 7/8] of the lower portion 101, the steering members 4 are configured to bring the probe 2 back to the central region 101a.

It is good to specify that keeping the probe 2 in the central region 101a of the lower portion 101, in particular making it follow a path substantially coincident with the lower generatrix 101c of the penstock 100, is important to ensure the acquisition of good and complete visual content that allows an accurate evaluation of the state of the penstock 100 without the execution of significant post-processing actions.

It is however good to specify that the steering members 4 can also be used to keep the probe 2 in the lateral regions 101b or in any other region of the internal surface 100a. Therefore, the steering members 4 are usable to make the probe 2 follow any generatrix of the penstock, even different from the lower one, or any desired path (i.e., the geometric locus of the points assumed by the probe 2 on the internal surface 100a during its movement along the main axis A-A of the penstock 100).

With reference to figures 1-3, the steering members 4 comprise a steering element 40 rotatably mounted on the main body 20 around the longitudinal axis X-X.

When the probe 2 is arranged internally in the penstock 100, the steering element 40 is configured to come into contact with the internal surface 100a of the penstock 100, in particular to rest on the lower portion 101.

It is worth noting that the rotation of the steering element 40 around the longitudinal axis X-X allows for varying the trajectory taken by the probe 2 and the path taken by the probe 2 on the internal surface 100a in its descent along the penstock 100. In other words, by rotating around the longitudinal axis X-X, the steering element 40 allows for modifying the position of the probe 2 around the main axis A-A along the circumferential direction C-C. Therefore, in use, the rotation of the steering element 40 is for example usable to move the probe between the lateral regions 101b and the central region 101a of the lower portion 101. The steering element therefore allows for modifying the position of the probe 2 in the transverse section of the penstock 100.

In the embodiment shown in figures 1-3, the steering element 40 is rotatably mounted on the front portion 20a of the main body 20. In particular, the steering element 40 is interposed between the anterior front 20a of the main body 20 and the acquisition unit 23 along the longitudinal axis X-X.

Preferably, the steering element 40 has a bulk along the transverse axis Y-Y of the probe 2 substantially equal to that of the main body 20.

Furthermore, preferably, the steering element 40 projects inferiorly from the main body 20 along the vertical axis Z-Z of the probe 2 so that, in use, the main body 20 is supported by the one or more wheels 21 and by the steering element 40.

More preferably, the steering element 40 projects from the main body 20 along the vertical axis Z-Z of the probe 2 by an amount substantially equal to that of the one or more wheels 21. In use, this allows maintaining the probe 2 with the longitudinal axis X-X substantially parallel to the main axis A-A of the penstock 100.

According to one aspect, the steering element 40 comprises a plurality of rolling elements 40a (e.g., small wheels, rollers) arranged around the longitudinal axis X-X and configured to roll on the internal surface 100a of the penstock 100 for the movement of the probe 2 along the main axis A-A. The rolling elements 40a are therefore arranged in a peripheral region of the steering element 40 and in succession around the longitudinal axis X-X along a circumferential path.

According to one aspect, the rolling elements 40a are at a fixed distance with respect to the longitudinal axis X-X and said distance is less than the diameter of the penstock 100. This allows maintaining the probe 2 compact and therefore insertable through the narrow manholes. Preferably, the distance of the rolling elements 40a from the longitudinal axis X-X is less than half the minimum dimension of the manholes.

During the inspection, the rotation of the steering element 40 around the longitudinal axis X-X brings the rolling elements 40a in succession into contact with the internal surface 100a of the penstock 100, thus modifying the descent trajectory of the probe 2 along the penstock 100 in accordance with what has been stated above.

Preferably, the steering element 40 extends 360° around the longitudinal axis X-X and, according to one aspect, the rolling elements 40a form an (external) crown adapted to come into contact with the internal surface 100a of the penstock 100.

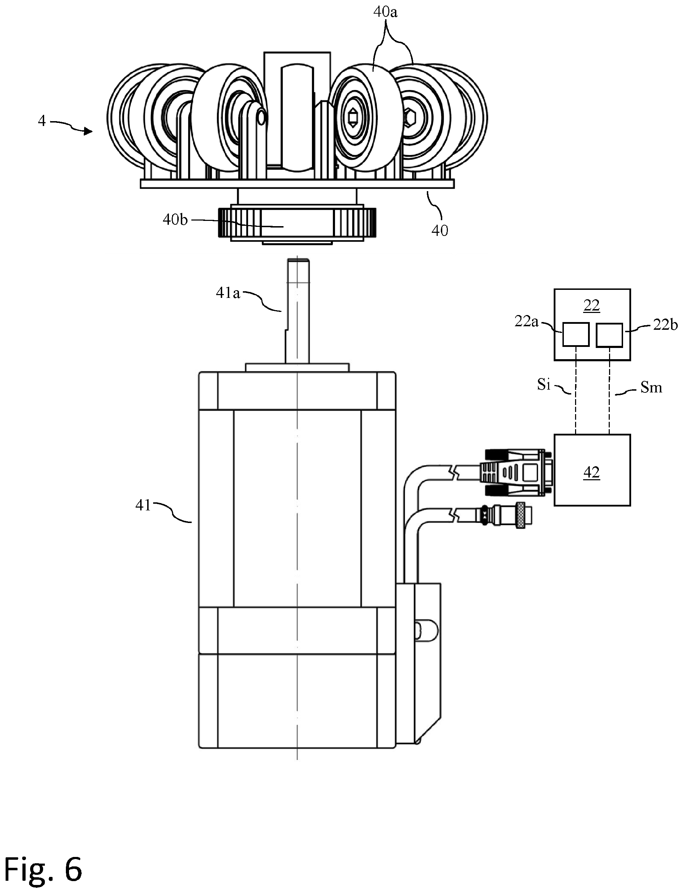

With reference to figure 6, the steering members 4 also comprise an actuator 41 configured to rotate the steering element 40 around the longitudinal axis X-X with respect to the main body 20.

The actuator 41 comprises for example a stepper motor and, according to one aspect, also comprises an optical encoder and/or a reducer (not shown in the figures), preferably of the planetary type. Should a further reduction be necessary, it is possible to use a pair of synchronous pulleys with a toothed belt (not shown in the figures) or equivalent transmission elements.

In the embodiment shown in the accompanying figures, the actuator 41 is housed in the cavity of the main body 20 of the probe 2 and has a motor shaft 41a kinematically connected to a hub 40b of the steering element 40.

The steering members 4 also comprise an electronic control unit 42, placed in signal communication with the detection unit 22 and the actuator 41. Said electronic control unit 42 is configured to control the angular position of the steering element 40 around the longitudinal axis X-X as a function of the inclination signal Si, so as to maintain the probe 2 in a predetermined position along the circumferential direction C-C - such as, for example, in the central region 101a of the lower portion 101 - during its movement along the penstock 100 in accordance with what has been described above.

In particular, according to one aspect, the electronic control unit 42 is configured to control the angular position of the steering element 40 as a function of the roll angle A1 detected by the inclination sensor 22a. In this regard, with reference to figures 7 and 8, it is evident that, when the probe 2 deviates from the central region 101a of the lower portion 101, the probe 2 performs a rotation around the longitudinal axis X-X, increasing the roll angle A1. Therefore, the detection of the roll angle A1 conveys information about the angular positioning of the probe 2 around the main axis A-A and, therefore, also about the centering of the probe 2 on the lower generatrix 101c or any other generatrix it is intended to follow.

Preferably, the electronic control unit 42 controls the actuator 41 which commands the angular position of the steering element 40 by performing a closed-loop feedback on the roll angle A1 transduced by the inclination sensor 22a into the inclination signal Si.

According to one aspect, the electronic control unit 42 is configured to control the angular position of the steering element 40 by actuating the actuator 41 when the roll angle A1 detected by the inclination sensor 22a has a deviation greater than a predetermined threshold value (e.g., 0.1 degrees) from a reference roll angle A1ref. If one wants the probe 2 to travel a path extending along the lower generatrix 101c of the penstock 100, the reference roll angle Alref set is equal to 0°. If, on the other hand, one wants the probe to travel a path extending along a generatrix differentfrom the lower one, the reference roll angle Alref set is different from 0°.

According to a further aspect, the electronic control unit 42 is configured to control the angular position of the steering element 40 by actuating the actuator 41 when the value of the movement speed of the probe 2 transduced in the movement signal Sm is greater than a predetermined threshold value Smref. This allows controlling the trajectory followed by the probe 2 only when the probe 2 is actually moving along the main axis of the penstock 100.

According to an embodiment, the electronic control unit 42 is configured to analyze the trend of the roll angle A1 for a predefined period of time (e.g., 1 second), deriving the mean value and the gradient therefrom. The actuator 41 is then preferably actuated on the basis of two terms: a first term proportional to the mean value which induces a correction in the probe 2 that brings it back towards the central region 101a of the lower portion 101 (the greater the mean value, i.e., the inclination of the probe 2 around the longitudinal axis X-X, the greater will be the speed of displacement of the probe 2 towards the central region 101a), and a second term proportional to the gradient which counteracts the speed of displacement of the probe 2 towards the central region 101a. Advantageously, the term proportional to the gradient allows avoiding overshoots and therefore the risk of climbing theopposite wall of the conduit (i.e., moving from a lateral region 101b to the opposite one 101b).

The electronic control unit 42 of the probe can for example exploit the ROS (Robot Operating System) framework, in which the hardware components are interfaced towards ROS by means of respective drivers that allow abstracting the particular device, making standard interfaces available towards the specific application. A control software of the probe is organized in nodes that interact via ROS topics by publishing and subscribing to standard messages. All the exchanged messages are recorded in logs to make subsequent analyses possible.

The probe 2 can comprise a battery pack (not shown in the figures), preferably arranged in the cavity of the main body 20, configured to supply electrical energy to its components that require it. The battery pack can be for example a 24V and 12Ah lithium-ion pack. Preferably, a fuse (e.g., a 20 A ATO blade fuse) protects the battery and the wiring from overloads and any short circuits.

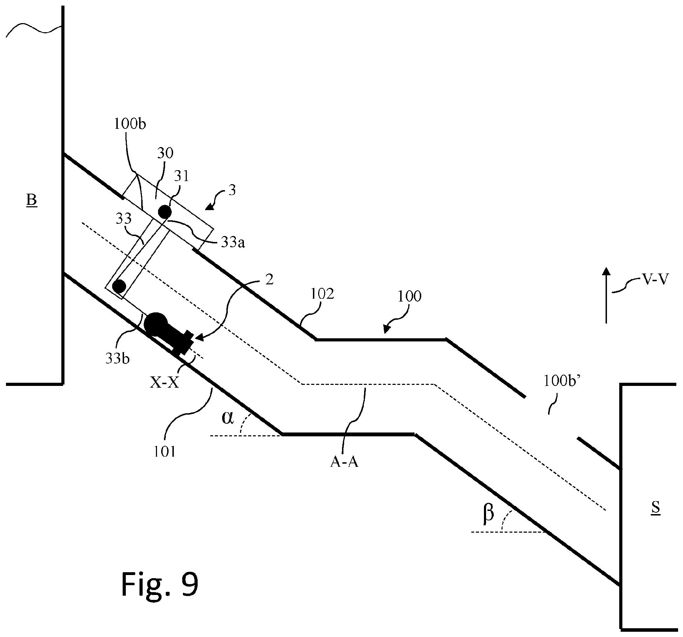

With reference to figures 9-11, the system object of the present description also comprises movement means 3 of the probe 2 along the penstock 100.

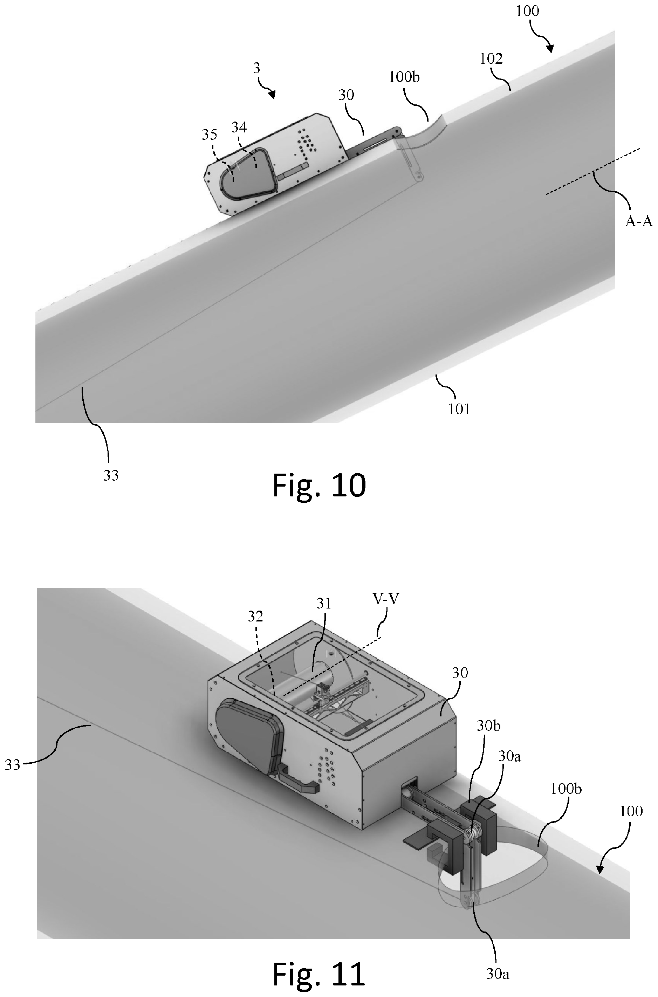

Said movement means 3 can be for example anchored externally to the penstock 100 at the access opening 100b (figures 10 and 11). However, in alternative embodiments, the movement means 3 can also be arranged at a terminal portion of the penstock (head or tail of the conduit).

Said movement means 3 are configured to lower (feed) the probe 2 into the penstock 100 at a controlled speed by opposing the force of gravity that acts on the probe 2 when it is in contact with the internal surface 100a of the penstock 100.

In this regard, it is worth noting that the penstocks 100 of hydroelectric plants have at least one section inclined with respect to the horizontal; therefore, when the probe is in said section, it behaves like a body on an inclined plane subject to a component of the force of gravity directed parallel to the inclined plane which, if not opposed, causes its descent along the inclined plane with uniformly accelerated motion.

The movement means 3 are configured to act on the probe 2 by exerting a reaction force opposite to the component of the force of gravity directed along the main axis A-A of the penstock 100 so that the probe 2 travels along the penstock 100 at a controlled speed. It is good to specify that in the system 1 object of the present description it is the force of gravity that causes the descent of the probe 2 along the penstock 100, the action of the movement means 3 is only such as to control the descent speed of the probe 2.

Preferably, the advancement speed of the probe 2 along the penstock controlled by means of the movement means 3 is constant. This is particularly advantageous if the acquisition unit 23 acquires panoramic images as these would suffer distortions if the advancement speed along the penstock 100 were variable, which would require post-processing operations to improve their legibility.

From the above, it emerges that the probe 2 object of the present invention is passive, that is, it exploits gravity for the descent along the penstock 100 and not any on-board motor means. This allows reducing the size of any batteries mounted on board the probe 2 and, therefore, the bulk of the latter, to the advantage of its insertion through the manholes.

In the embodiment shown in figures 9-11, the movement means 3 comprise a frame 30 removably anchorable to the penstock 100 (e.g., by means of appropriate anchoring members 30b), a drum 31 rotatably mounted on the frame 30 around a winding/unwinding axis V-V, a motor 32 (e.g., brushless) configured to rotate the drum 31 around the winding/unwinding axis V-V, and a rope 33 windable/unwindable on/from the drum 31 upon rotation of the latter around the winding/unwinding axis V-V.

In detail, still with reference to the embodiment shown in figures 9-11, said rope 33 has a first end 33a fixed to the drum 31 and a second end 33b which, during the inspection operations, is fixed to the probe 2, preferably to the rear portion 20b of the main body 20.

In use, the rope 33 holds the probe 2 by exerting on it a reaction force contrary to the component of the force of gravity directed along the main axis of the penstock A-A. Therefore, by gradually unwinding the rope 33 from the drum 31 by rotating it around the winding/unwinding axis V-V by means of the motor 32, due to the effect of the force of gravity, the probe 2 travels along the penstock 100 at a controlled speed dependent on the angular speed of the drum 31. By controlling the angular speed of the drum 31, i.e., the actuation by means of the motor 32, it is therefore possible to control the descent speed of the probe 2 along the penstock A-A.

Once the inspection is completed, the probe 2 is typically recovered further downstream from the insertion point, for example, through a further access opening 103b'.

It is worth noting, however, that it is also possible to recover the probe by rewinding the rope 33 onto the drum 31 by rotating it around the winding/unwinding axis V-V in a direction of rotation opposite to that of unwinding.

The rope 33 is preferably a steel cable.

Furthermore, preferably, the rope 33 is not used to convey electrical power or electronic signals of any type. Advantageously, this allows keeping the rope 33 light, making the system 1 convenient and practical to use, especially in penstocks 100 with significant extensions.

In the embodiment shown in figures 9-11, the frame 30 is configured to be at least partially inserted into the penstock 100 and has a return roller 30a configured to arrange the rope 33 in the penstock 100 prevalently parallel to the main axis A-A.

According to one aspect, the movement means 3 also comprise a tension detector 34 (e.g., load cells) and a movement control unit 35 placed in signal communication with the latter.

The tension detector 34 is configured to detect a tension value T, representative of the tensioning level of the rope 33, and transduce it into a tension signal St.

Having received the tension signal St as input, the movement control unit 35 comprises a first module configured to actuate the motor 32 if the detected tension value T is greater than a lower threshold value Ti (non-zero) and lower than an upper threshold value Ts.

The lower threshold value Ti, for example equal to 0.5 kg, allows always keeping the rope 33 in tension and preventing it from going slack (i.e., excessive loosening of the rope) and getting tangled (i.e., twisting/knotting of the rope).

The upper threshold value Ts, for example equal to 15 kg, allows interrupting the operation in case the probe gets stuck in the penstock 100.

According to one aspect, the movement control unit 35 controls the actuation of the motor 32 in a closed loop.

Preferably, the movement control unit 35 comprises a second module responsible for controlling the angular speed of the drum 32 based on the amount of rope wound on it, and consequently on the diameter of the coils, so that the advancement speed of the probe 2 is equal to a preset value. To this end, the movement control unit 35 can for example control the motor 32 in a closed loop.

In a possible embodiment, the probe 2 may comprise motorization means 24 configured to rotate at least one drive wheel 21a of the at least one wheel 21 of the main body 20 to cause the advancement of the probe 2 in the penstock 100 along the main axis A-A.

It is worth noting that the motorization means 24 allow overcoming any flat or low-slope sections of the penstock 100, as well as any obstacles present inside the conduit (e.g., accumulations of limescale). It is however good to specify that, according to one aspect, said motorization means 24 are not used to move the probe 2 along the penstock 100 in the inclined sections where, according to what has been stated above, the force of gravity is exploited to perform the advancement of the probe 2 in the penstock 100.

Preferably, the one or more drive wheels 21a are arranged in the rear portion 20b of the main body 20.

According to one aspect, the motorization means 24 comprise at least one brushless motor (not shown in the figures) kinematically connected to at least one drive wheel 21a. The motorization means 24 may also comprise an encoder (preferably of the magnetic type), and/or a reducer (preferably of the planetary type), and/or an integrated control electronics.

Preferably, the electronic control unit 42 is configured to actuate the motorization means 24 as a function of the pitch angle A2 detected by the inclination sensor 22a.

In particular, according to one aspect, the electronic control unit 42 is configured to actuate the motorization means 24 when the detected pitch angle A2 is lower than a threshold pitch value A2ref. This allows automatically actuating the motorization means 24 when the probe 2 is in a low-slope or horizontal section, that is, in a section of the penstock 100 where the force of gravity is not sufficient to advance the probe 2.

It is good to specify that the probe 2 is usable independently of the movement means 3. Therefore, the probe 2 per se is also an object of the present invention.

Also an object of the present invention is a method for inspecting the penstock 100 by means of the system 1 - or possibly also only by means of the probe 2 - described above.

It is good to specify that, during the inspection operations of the penstock 100, the probe 2 can be operated in: manual guidance mode, i.e., totally commanded by an operator by means of a suitable radio control; assisted guidance, in which the probe 2 automatically centers itself in the central region 101a of the lower portion 101 of the penstock 100 or on the generatrix that one wishes to follow but the operator commands its advancement via the radio control; autonomous guidance, in which the probe 2 performs the inspection autonomously.

Obviously, a person skilled in the art may make numerous equivalent modifications to the variants described above, without thereby departing from the scope of protection defined by the appended claims.

## Claims

1. System (1) for the inspection of a penstock (100) of a hydroelectric plant, said penstock (100) extending along a main axis (A-A), said system (1) comprising:
- a probe (2) configured to be inserted into the penstock (100) so as to get in contact with an inner surface (100a) of said penstock (100), the probe (2) comprising:
- a main body (20) extending along a longitudinal axis (X-X) and having at least one wheel (21) configured to roll on the inner surface (100a) of the penstock (100) upon the movement of the probe (2) along the main axis (A-A), said main body (20) being configured so that, when the probe (2) is inserted into the penstock (100), the longitudinal axis (X-X) is distinct from the main axis (A-A) of the penstock (100)
- a detection unit (22) comprising at least one inclination sensor (22a) configured to transduce the inclination of the main body (20) relative to a vertical direction (V-V) into a inclination signal (Si),
- an acquisition unit (23) comprising at least one imaging device (23a, 23b) configured to acquire visual content,
**characterised in that:**
- it comprises movement members (3) configured to lower the probe (2) into the penstock (100) along the main axis (A-A) at a controlled speed opposing the force of gravity acting on the probe (2) when said probe (2) is in contact with the inner surface (100a),
- the probe (2) is provided with steering members (4) comprising:
- a steering element (40) rotatably mounted on the main body (20) about the longitudinal axis (X-X), said steering element (40) being configured to contact the inner surface (100a) of the penstock (100) and, by rotating about the longitudinal axis (X-X), change the position of the probe (2) in the penstock (100) about the main axis (A-A) along a circumferential direction (C-C),
- actuating members (41) configured to rotate the steering element (40) about the longitudinal axis (X-X) relative to the main body (20),
- an electronic control unit (42), placed in signal communication with the detection unit (22) and the actuating members (41), configured to control the angular position of the steering element (40) about the longitudinal axis (X-X) according to the inclination signal (Si) so as to maintain the probe (2) in a predetermined position along the circumferential direction (C-C) during the movement along the main axis (A-A) of the penstock (100).

2. System (1) according to claim 1, wherein the electronic control unit (42) is configured to make the probe (2) run along a path having at least one section extending along a generatrix (101c) of the penstock (100).

3. System (1) according to claim 1 or 2, wherein:
- the inclination sensor (22a) is configured to detect a roll angle (A1) representative of the inclination of the main body (20) about the longitudinal axis (X-X) and transduce said roll angle (A1) into the inclination signal (Si),
- the electronic control unit (42) being configured to control the angular position of the steering element (40) according to the detected roll angle (A1).

4. System (1) according to claim 3, wherein the electronic control unit (42) is configured to control the angular position of the steering element (40) when the detected roll angle (A2) has a deviation from a reference roll angle (A1_{rif}) greater than a threshold value.

5. System (1) according to any one of the preceding claims, wherein:
- the detection unit (22) comprises at least one movement sensor (22b) adapted to transduce a movement speed value of the probe (2) relative to the penstock (100) into a movement signal (Sm),
- the electronic control unit (42) being configured to control the angular position of the steering element (40) when the speed value of the probe (2) transduced into the movement signal (Sm) is greater than a predetermined threshold value (Sm_{rif}).

6. System (1) according to any one of the preceding claims, wherein:
- the steering element (40) comprises a plurality of rolling elements (40a) arranged about the longitudinal axis (X-X) and configured to roll on the inner surface (100a) of the penstock (100) upon the movement of the probe (2) along the main axis (A-A),
- the steering element (40) rotating about the longitudinal axis (X-X) is configured to bring the rolling elements (40a) into contact with the inner surface (100a) in succession.

7. System (1) according to any one of the preceding claims, wherein the movement elements (3) comprise:
- a frame (30) anchorable to the penstock (100),
- a drum (31) rotatably mounted on the frame (30) about a winding/unwinding axis (V-V),
- a motor (32) configured to rotate the drum (31) about the winding/unwinding axis (V-V),
- a rope (33), which can be wound on/unwound from the drum (31), having a first end (33a) fixed to the drum (31) and a second end (33b) fixable to the probe (2).

8. System (1) according to claim 7, wherein the movement members (3) comprise:
- a tension detector (34) configured to detect a tension value (T) representative of the rope tension (33) and transduce said tension value (T) into a tension signal (St),
- a movement control unit (35), placed in signal communication with the motor (33) and the tension detector (34), configured to actuate the motor (32) if the tension value (T) is greater than a lower tension threshold value (Tᵢ) that is not zero and less than an upper tension threshold value (Tₛ).

9. System according to any one of the preceding claims, wherein:
- the probe (2) comprises driving means (24) configured to rotate at least one drive wheel (21a) of said at least one wheel (21) of the main body (20) to cause the advancement of the probe (2) in the penstock (100) along the main axis (A-A),
- the electronic control unit (42) is placed in signal communication with said driving means (24) to control the actuation of the at least one drive wheel (21a) according to the inclination signal (Si).

10. System (1) according to any one of the preceding claims, wherein the acquisition unit (23) comprises a plurality of radial imaging devices (23a) arranged along respective radial directions (R-R) about the longitudinal axis (X-X) such that, when the probe (2) is arranged inside the penstock (100), each radial imaging device (23a) frames a respective sector of the inner surface (100a).

11. System (1) according to claim 10, wherein at least two of the radial imaging devices (23a) have different focal lengths or are configured to digitally focus at two different distances.

12. System (1) according to claim 10 or 11, wherein the acquisition unit (23) comprises:
- a transparent protection element (23c) surrounding the radial imaging devices (23a) about the longitudinal axis (X-X),
- a support (23d) configured to support and arrange the radial imaging devices (23a) along their respective radial directions (R-R) so as to be able to frame the inner surface (100a) of the penstock (100) through the protection element (23c), said support (23d) comprising bulkheads (23e) interposed between the radial imaging devices (23a).

13. System (1) according to any one of the preceding claims, wherein:
- the main body (20) extends along the longitudinal axis (X-X) between a front portion (20a) and a rear portion (20b),
- the steering element (40) is rotatably mounted at the front on the front portion (20a) of the main body (20) along the longitudinal axis (X-X),
- the acquisition unit (23) is attached to the front portion (20a) of the main body (20) at the front of the steering element (40).
